# EUROPEAN PATENT APPLICATION

(11) **EP 0 714 943 A2**
(43) Date of publication of application: **05.06.1996**
(21) Application number: 95308182.5
(22) Date of filing: 15.11.1995
(51) Int. Cl.: C08L 27/06, C08L 51/00, C08K 5/092

(54) **Impact modifier vinyl chloride resin composition, and graft copolymer compositions**

(30) Priority: 02.12.1994 US 348435
(71) Applicant: GENERAL ELECTRIC COMPANY, Schenectady, NY 12345 (US)
(72) Inventor: Jalbert, Ronald Louis, Parkersburg, West Virginia 26101 (US); Vilasagar, Shripathy, Parkersburg, West Virginia 26101 (US); Peascoe, Warren Joseph, Vianna, West Virginia 26105 (US); Willard, Fred G., Parkersburg, West Virginia 26101 (US)
(74) Representative: Szary, Anne Catherine

(57) **Abstract**

A reduced fogging impact modified vinyl chloride composition is provided. The composition contains a graft copolymer which is formed by an emulsion process involving grafting a rigid polymeric superstrate to a polyacid surfactant containing rubber. The composition is useful for making molded parts such as automotive dash components, and exhibit reduced level of fogging onto the automotive windshield compared to graft copolymers formed via a process utilizing a linear mono fatty acid.

## Description

The present invention relates to vinyl chloride resin compositions and impact modifiers, and more particularly relates to impact modified vinyl chloride resin compositions and graft copolymer compositions.

### Description of the Related Art

Polyvinyl chloride resins and rigid vinyl aromatic-vinyl cyanide resins are generally relatively brittle, and consequently are typically impact modified with graft copolymers such as acrylonitrile-styrene-butadiene graft copolymers (ABS) comprising a butadiene rubber substrate and an acrylonitrile-styrene superstrate. Traditional surfactants based on linear fatty acids, used in emulsion processes for making the ABS resin tend to fog or volatilize from the surface of ABS resin or blends thereof either in the molten state and/or in high temperature end-use environments such as is experienced in the interior of an automobile during the summer months. Individuals purchasing a new automobile have typically experienced the deposit of organic material on the interior of a windshield after 6 months to a year.

Accordingly, there is a need and desire for impact modified resin compositions which exhibit reduced levels of fogging.

### Summary of the Invention

An impact modified resin composition is provided comprising (a) an impact modifier containing a residual amount of a C₃₀ to C₁₀₈ polyacid surfactant. The compositions exhibit reduced levels of fogging, and are useful for making automotive dash components. The impact modified composition further contains a vinyl chloride resin and/or a vinyl aromatic-unsaturated nitrile resin.

### Detailed Description of the Invention

A thermoplastic composition is provided comprising (a) a vinyl chloride resin or vinyl aromatic-vinyl cyanide resin present at a level of from 20 to 95 percent by weight based on the total weight of the thermoplastic composition, more preferably from 60 to 92 percent by weight thereof, and most preferably from 80 to 90 percent by weight thereof, and (b) an impact modifier composition present at a level of from 5 to 80 percent by weight based on the total weight of the thermoplastic composition, more preferably from 8 to 40 percent by weight thereof, and most preferably 10 to 20 percent by weight thereof. Optionally, the thermoplastic resin compositions containing the vinyl chloride resin may further an amount of (c) a non-graft non-rubber vinyl polymer at a level of from, for example, 5 to 40 percent by weight and for further example from 10 to 20 percent by weight based on the total weight of the thermoplastic composition.

Vinyl chloride resin employed in the present invention is vinyl chloride homopolymers, such as polyvinyl chloride, and copolymers prepared by copolymerizing more than 50 percent by weight of vinyl chloride and at least one monoolefinic monomer, such as vinyl acetate, vinyl stearate, acrylic ester, methacrylic ester, styrene, acrylonitrile, ethylene, propylene and the like.

Vinyl aromatic-vinyl cyanide resin comprises from 60 to 90 percent by weight vinyl aromatic monomer based on the total weight of the vinyl aromatic-vinyl cyanide resin, more preferably from 65 to 80 percent by weight thereof, and most preferably from 72 to 75 percent by weight thereof; a vinyl cyanide (unsaturated nitrile) monomer is present at a level of from 10 to 40 percent by weight, more preferably from 20 to 35 percent by weight and most preferably from 25 to 28 percent by weight.

The rubber graft copolymer useful in the impact modifier composition (graft copolymer composition) comprises (i) the rubber substrate, and (ii) a rigid polymeric superstrate portion grafted to the rubber substrate, and optionally a free rigid component. The rubber substrate is preferably present in the impact modifier composition at a level of from 10 to 90 percent by weight based on the total weight of the graft copolymer, more preferably from 40 to 85 percent by weight thereof, and more preferably 50 to 85 percent by weight thereof and most preferably from 65 to 85 percent by weight thereof; and the rigid superstrate (and optional free rigid in combination) is preferably present at a level of from 10 to 90 percent by weight based on the total weight of the graft copolymer, preferably from 15 to 60 percent by weight thereof, more preferably from 15 to 50 percent by weight thereof, and most preferably from 15 to 35 percent by weight thereof. The free rigid portion, if present, is at about 0-50% by weight based on the total weight of the composition. The rubber substrate is a rubber having a Tg (glass transition temperature) of less than 0°C.

Examples of rubbery polymers for the substrate include: conjugated dienes, copolymers of a diene with styrene, acrylonitrile, methacrylonitrile or C₁ to C₈ alkyl acrylate which contain at least 50% (preferably at least 65% by weight) conjugated dienes, polyisoprene or mixtures thereof; olefin rubbers i.e. ethylene propylene copolymer (EPR) or ethylene propylene non-conjugated diene (EPDM); silicone rubbers; or C₁ or C₈ alkyl acrylate homopolymers or copolymers with butadiene and/or styrene. The acrylic polymer may also contain up to 5% of one or more polyfunctional crosslinking agents such as alkylenediol di(meth)acrylates, alkylenetriol tri(meth)acrylates, polyester di(meth)acrylates, divinylbenzene, trivinylbenzene, butadiene, isoprene and optionally graftable monomers such as, triallyl cyanurate, triallyl isocyanurate, allyl (meth)acrylate, diallyl maleate, diallyl fumarate, diallyl adipate, triallyl esters of citric acid or mixtures of these agents.

The diene rubbers may preferably be polybutadiene, polyisoprene and copolymers of butadiene with up to 35% by weight of comonomers such as styrene, acrylonitrile, methylmethacrylate or C₁-C₆-alkylacrylate which are produced by aqueous radical emulsion polymerisation and may optionally be crosslinked with di or trivinyl or allyl monomers or mixtures of such monomers or structures.

### The rubbers may be cross-linked, particulate emulsion copolymers substantially of C₁-C₈-alkylacrylate, in particular C₂-C₆-alkylacrylate, optionally in admixture with up to 15% by weight of comonomers such as styrene, methylmethacrylate, butadiene, vinyl methyl ether or acrylonitrile and optionally up to 5% by weight of a polyfunctional crosslinking comonomer, e.g. divinylbenzene, glycol-bis-acrylates, bisacrylamides, phosphoric acid triallylester, citric acid triallylester, allylesters of acrylic acid or methacrylic acid, triallylcyanurate, triallylisocyanurate. Also suitable are mixtures of diene- and alkylacrylate rubbers and rubbers which have a so-called core/sheath structure, e.g. a core of diene rubber and a sheath of acrylate or vice versa.

Specific conjugated diene monomers normally utilized in preparing the rubber substrate of the graft polymer are generically described by the following formula: 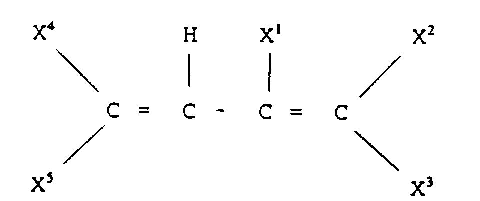 wherein each X¹, X², X³, X⁴ and X⁵ is individually selected from the group consisting of hydrogen, alkyl groups containing from one to five carbon atoms, chlorine or bromine. Examples of dienes that may be used are butadiene, isoprene, 1,3-heptadiene, methyl-1,3-pentadiene, 2,3-dimethylbutadiene, 2-ethyl-1,3-pentadiene 1,3- and 2,4-hexadienes, chloro and bromo substituted butadienes such as dichlorobutadiene, bromobutadiene, dibromobutadiene, mixtures thereof, and the like. A preferred conjugated diene is 1,3 butadiene.

The substrate polymer, as mentioned, is preferably a conjugated diene polymer such as polybutadiene, polyisoprene, or a copolymer, such as butadiene-styrene, butadiene-acrylonitrile, or the like. The rubbery polymeric substrate portion must exhibit a glass transition temperature (Tg) of less than about 0°C.

Mixtures of one or more rubbery polymers previously described for preparing the graft polymers, or mixtures of one or more graft polymers disclosed herein may also be employed. Furthermore, the rubber may comprise either a block or random copolymer.

The rubber particle size used in this invention as measured by simple light transmission methods or capillary hydrodynamic chromatography (CHDF) may be described as having an average particle size by weight of: 0.05 to 1.2 microns, preferably 0.2 to 0.8 microns, for the emulsion based polymerized rubber latices. The rubber substrate is preferably a particulate, crosslinked diene or alkyl acrylate rubber, and preferably has a gel content greater than 50%.

Suitable superstrates include vinylidene polymers including homopolymers and copolymers.

Monovinylidene aromatic monomers (vinyl aromatic monomers) which may be employed in making of the superstrate include styrene, alpha-methyl styrene, halostyrenes i.e. dibromostyrene, mono or di alkyl, alkoxy or hydroxy substitute groups on the nuclear ring of the monovinylidene aromatic monomer i.e. vinyl toluene, vinylxylene, butylstyrene, parahydroxystyrene or methoxystyrene or mixtures thereof. The monovinylidenearomatic monomers utilized are generically described by the following formula: 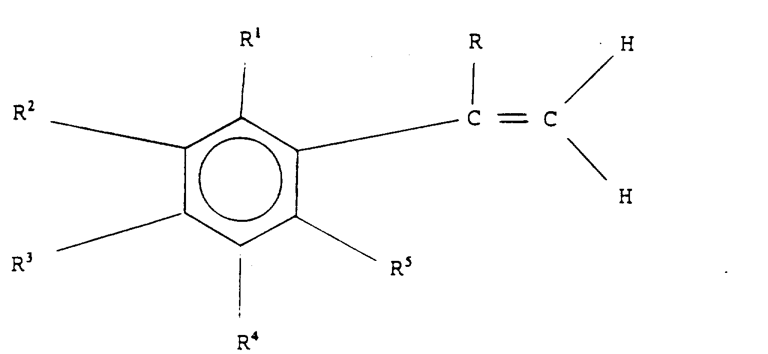 wherein each R¹, R², R³, R⁴ and R⁵ is individually selected from the group consisting of hydrogen, alkyl groups of 1 to 5 carbon atoms, cycloalkyl, aryl, alkaryl, aralkyl, alkoxy, aryloxy, and halogens. R is selected from the group consisting of hydrogen, alkyl groups of 1 to 5 carbon atoms and halogens such as bromine and chlorine. Examples of substituted vinylaromatic compounds include styrene, 4-methylstyrene, 3, 5-diethylstyrene, 4-n-propylstyrene, α-methylstyrene, α-methyl vinyltoluene, α-chlorostyrene, α-bromostyrene, dichlorostyrene, dibromostyrene, tetrachlorostyrene, mixtures thereof and the like. The preferred monovinylidene aromatic monomers used are styrene and/or α-methylstyrene.

Monomers which may be used alone or in combination with the monovinylidene aromatic monomer includes acrylonitrile, methacrylonitrile, C₁ to C₈ alkyl or aryl substituted acrylate, C₁ to C₈ alkyl, aryl or haloaryl substituted methacrylate, acrylic acid, methacrylic acid, itaconic acid, acrylamide, N-substituted acrylamide or methacrylamide, maleic anhydride, maleimide, N-alkyl, aryl or haloaryl substituted maleimide, glycidyl (meth)acrylates, hydroxy alkyl (meth)acrylates or mixtures thereof. The unsaturated nitrile (acrylonitrile or substituted acrylonitrile) or acrylic acid esters are described generically by the following formula: 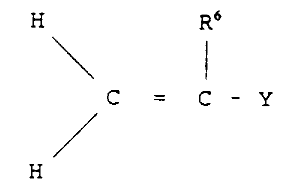 wherein R⁶ may be selected from the same group set out for R as previously defined and Y is selected from the group consisting of cyano and carbalkoxy groups wherein the alkoxy group of the carbalkoxy contains from one or about twelve carbon atoms. Examples of such monomers include acrylonitrile, ethacrylonitrile, methacrylonitrile, α-chloroacrylonitrile, a-bromoacrylonitrile, methyl acrylate, methyl methacrylate, ethyl acrylate, butyl acrylate, propylacrylate, isopropyl acrylate and mixtures thereof. The preferred unsaturate nitrile monomer is acrylonitrile and the preferred acrylic acid esters are ethyl acrylate and methyl methacrylate. It is also preferred that the acrylic acid esters, when included, are employed in combination with styrene or acrylonitrile.

The number average molecular weight of the grafted rigid superstrate of the monovinylidene aromatic resin is designed to be in the range of 10,000 to 350,000. The ratio of monovinylidene aromatic monomer to the second and optionally third monomer may range from 100/0 to 50/50 preferably 85/15 to 60/40. Additional monomer(s) may optionally replace 0 to 50% of one or both of the first and second monomers. Preferred graft superstrates include copolymers of styrene and acrylonitrile, copolymers of a-methylstyrene and acrylonitrile, and methylmethacrylate polymers or copolymers with up to 50% by weight of C₁-C₆ alkylacrylates, acrylonitrile or styrene.

These graft copolymers may be polymerized either by emulsion or combined processes such as emulsion-suspension or pother emulsion techniques well known in the art. Furthermore, these rubber modified monovinylidene aromatic graft copolymers may be produced either by continuous, semibatch or batch processes.

Optionally the composition may include ungrafted (free) rigid phase portion which is a reaction product of the same monomers as set out for the superstrate, specifically vinyl aromatic monomers, unsaturated nitrile monomers, alkyl (alkyl) acrylate monomers and mixtures thereof. The free rigid phase is a term for the ungrafted rigid polymer. Preferably the free rigid phase and the grafted superstrate of the impact modifier composition are in respective ratios of 50:50 to 0:100, optionally from 30:70 to 5:95. In other words, it is preferred that the grafted superstrate be present in amounts much greater than the free rigid phase.

Alternatively, the monovinylidene aromatic monomers may be replaced in whole or in part with (or be free of) acrylic acid esters such as methylmethacrylate and/or ethylacrylate

The preferred impact modifier compositions (graft copolymer compositions) are compositions which comprise amounts of a graft copolymer selected from the group consisting of acrylonitrile-butadienestyrene graft copolymers, methylmethacrylate-butadiene-styrene graft copolymers methylmethacrylate-alkyl acrylate grafted to butadiene or styrene-butadiene rubber, methylmethacrylate-acrylonitrile-butadiene-styrene graft copolymers, methylmethacrylate-ethylacrylate onto polybutylacrylate butylacrylate-styrene-acrylonitrile graft copolymers, butylacrylate-ethylacrylate-styrene graft copolymers, and acrylonitrile-ethylacrylate-styrene graft copolymers.

Specific examples of monovinylidene aromatic graft copolymers include but are not limited to the following: acrylonitrile-butadiene-styrene (ABS), acrylonitrile-styrene-butyl acrylate (ASA), methylmethacrylate-acrylonitrile-butadiene-styrene (MABS), acrylonitrile-ethylene-propylene-nonconjugated diene-styrene (AES), methylmethacrylate-butadiene-styrene and methylmethacrylate-butadiene.

Suitable vinylidene rigid polymers including homopolymers and copolymers used in this invention and prepared independently from the vinylidene graft copolymer include monovinylidene aromatic monomers (first monomer) as described previously and other comonomers (second monomer) also described earlier. The compositional ratio of the first monomer to the second may range from 100/0 to 50/50 preferably 85/15 to 60/40. Additional monomer(s) may optionally replace 0 to 50% of one or both of the first and second monomers.

The number average moleculate weight of the vinylidene rigid polymer is designed to be in the range of 10,000 to 350,000. Preferred vinylidene rigid polymers include copolymers of styrene and acrylonitrile, and homopolymers or copolymers of methylmethacrylate with up to 50% by weight of C₁ to C₈ alkylacrylates, acrylonitrile or styrene.

These vinylidene rigid polymers may be polymerized either by emulsion, emulsion-suspension, suspension or bulk techniques well known in the art. Furthermore, the rigid polymers may be produced either by continuous, semibatch or batch processes.

Antioxidants such as thio ester antioxidants and hindered phenols may be added to the impact modifier. The present invention preferably utilizes (adds to the emulsion) an antioxidant composition which contains an amount of polyacid surfactant. The antioxidant may be in the form of an antioxidant emulsion.

The polyacid is preferably present in the graft copolymer composition (impact modifier composition) at a level of from 0.25 to 5 percent by weight based on the total weight of the graft copolymer composition, more preferably present at a level of from 0.75 to 3.5 percent by weight thereof, more preferably is present at a level of from 1.5 to 2.75 percent by weight thereof. The polyacids have from 30 to 108 carbon atoms (C₃₀ to C₁₀₈), more preferably from C₃₂ to C₆₀. The polyacid component may be in the form of an admixture of polyacids, and is preferably substantially (>50 percent by weight) di and/or triacids, and more preferably substantially dimerized fatty acids and/or trimerized fatty acids. Preferably the polyacid in the form of carboxylate salts of the polyacid function are surfactants, emulsifiers or soaps. The dimerized fatty acid soaps that are useful in the emulsifying agents are soaps of polycarboxylic acids resulting from the polymerization of drying oil or semi-drying oil fatty acids. Suitable fatty acids include polyunsaturated fatty acids, such as linoleic acid, as well as mixtures of fatty acids that contain a substantial amount of polyunsaturated acids, such as soybean oil fatty acids and tall oil fatty acids. Such acids may be dimerized, for example, by heating them under pressure in the presence of an alkaline catalyst. The term "dimerized fatty acids" as used herein is intended to include the mixture of acids resulting from the dimerization of drying oil or semi-drying oil fatty acids. This mixture ordinarily includes a major amount of dimeric acids, trimeric acids and higher polymeric acids (and smaller amounts of unpolymerized (monomeric) acids). Examples include the following but are not limited to these structures:

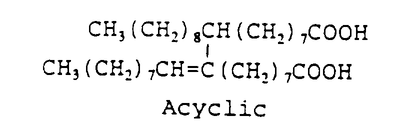

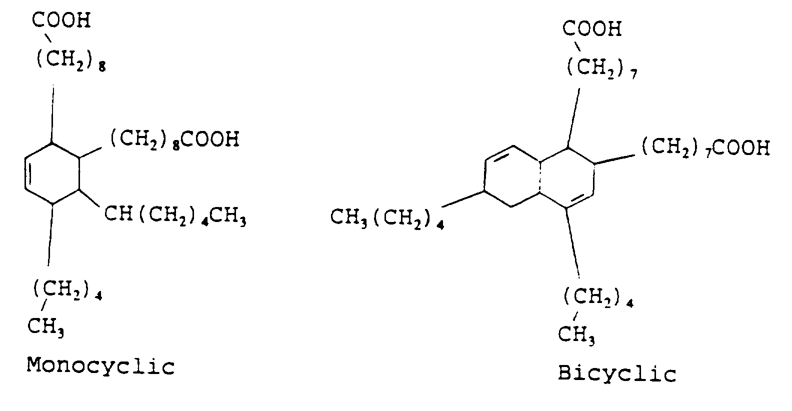

linear dimer acids: 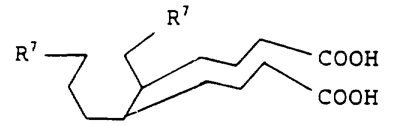 cyclic dimer acids: 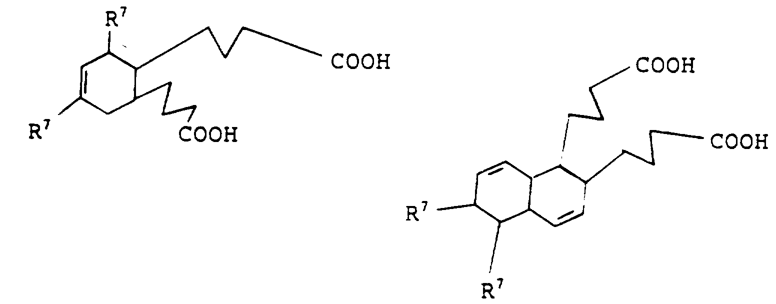 aromatic dimer acids: 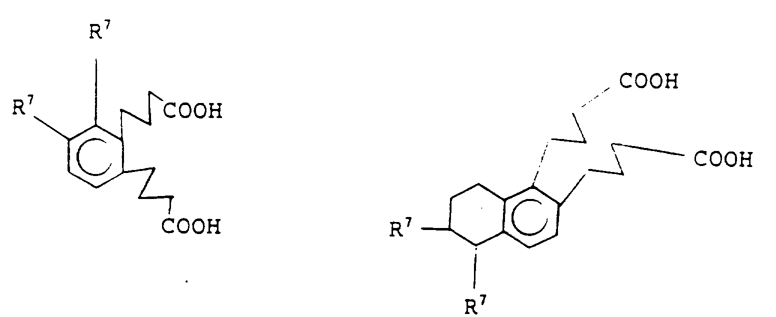 Each R⁷ is preferably a hydrogen or aliphatic hydrocarbon radical (alkyl) having from 1 to 18 carbon atoms and is more preferably of the formula (CH₂)ₓ wherein x is from 1 to 22. Dimerized fatty acids may be formed by dimerizing fatty acids containing ethylenic linkages and from about 14 to about 22 carbon atoms in length. Monobasic acids which dimerize to form products as illustrated above include: oleic, elaidic, palmitoleic, linoleic, linolenic, licanic, arachidonic, erucic, clupanodonic, elaeostearic, etc. In commercial practice naturally occurring mixtures of these acids are generally employed for production of dimerized fatty acids. Such acids may be derived from sources such as tall oil fatty acids, tallow (animal grease) fatty acids and vegetable oils, e.g. soya, linseed, cottonseed, and other oils comprised of unsaturated fatty acid glycerides. In general, the dimerization is carried out by heating the monomeric acid at an elevated temperature, with or without a catalyst, while avoiding cracking and decarboxylation. U.S. patents 2,482,761, 2,664,429, 2,793,219, 2,793,220, 2,955,121, 3,076,003, 3,507,890 and 3,925,342 describe dimerization in further detail. Various types of dimerized fatty acids are available and the commercial products of dimerized fatty acids frequently contain trimerized fatty acids, which are tribasic acids formed as a by-product through the polymerization of three molecules of the fatty acids. In addition, the commercial products may contain small percentages of isomerized monobasic acids or unreacted or fully saturated monomeric monobasic fatty acids which did not polymerize or which were not removed after the polymerization was carried out. The dimerized fatty acids employed to prepare the novel compositions of this invention preferably comprise a product having not more then about 70% tribasic acid and for very low non juicing characteristics not more than 20% monobasic acids. And preferably not more than 10% by weight monobasic acid based on the total weight of the polyacid component. The dimerized acid content is preferably at least 75% by weight based on the total weight of the surfactant. For improved color, the dimerized fatty acids may be partially or fully saturated by hydrogenation in a subsequent reaction step as described in Chapter 5 entitled "Hydrogenation of Fatty Acids" in the book "Fatty Acids in Industry" edited by Robert Johnson and Earle Fritz and published by Marcel Dekker, Inc. NY, NY. All dimer acids are liquid at 25°C even though their number average molecular weight is typically above 500 (for example, about 560). The dimerization process may produce a mixture of monoacids, diacids, triacids, and higher polymeric acids. Preferably more than about half of the dimerized acid is comprised of isomers with cyclic aliphatic or aromatic structures. The cyclic structures include monocyclic and bicyclic aliphatic and aromatic structures. The cyclic structures generally form during the dimerization process, but their mode of formation is not critical to this invention. It is further important to note that there is no rosin acid, abietic acid or derivatives thereof present in these compositions in part because such materials as abietic acid can be undesirably volatile and can result in juicing and fogging.

Preferred polyacids are cyclic polyacids and cyclic aromatic polyacids. Preferably the polyacid is soluble and/or miscible in the thermoplastic compositions. The polyacid is preferably a C₃₀ to C₁₀₀ polyacid in order to minimize fogging, and are more preferably C₃₄ to C₅₆ polyacids.

The process of this invention involves emulsion polymerizing a diene rubber substrate with an ethylenically unsaturated compound selected from the group of monovinyl aromatic monomers, unsaturated nitrile monomers, alkyl (alka) acrylate monomers, and mixtures thereof, the polymerization being in the presence of a polyacid surfactant to deter formation of coagulum, the polymerization forming an impact modifier composition containing the polyacid surfactant. Preferably the thermoplastic compositions obtained pursuant to the present invention when injection molded pursuant to the following conditions: a 5 oz. capacity molding machine with a clamp force of 150 tons; a 4" x 6" x 0.125" removable mold cavity insert; a mold temperature of 80°F; a melt stock temperature of 575°F; an injection speed of 1.0 inch/second; a screw speed of 75 RPM; a screw back pressure of 100 psi; a cycle time of approximately 32 seconds; a short shot equaling 95% of cavity capacity; an accumulation of mold deposit resulting from 150 molding cycles; removing the cavity from the molding machine and washing the removable mold cavity with chloroform to collect the residue in a 20 mil scintillation vial; weighing a tarred scintillation vial to determine the amount of accumulated residue in milligrams after carefully removing the chloroform; analyzing the contents by Fourier Transform InfraRed (FTIR), high pressure liquid chromatography (HPLC), etc. yields a fogging level of less than 12 mgs, more preferably less than 9 mgs, and most preferably less than 7 mgs after 150 short shots. The process further involves injection molding a thermoplastic composition containing the impact modifier composition to form a molded article. The thermoplastic compositions made by this present process exhibit reduced levels of fogging compared to those which contain a monoacid surfactant. The injection molding process typically occurs at a temperature of at least 500°F, more typically at temperatures of between 515 and 575°F, and most preferably at temperatures between 525 and 550°F. These relatively high injection molding temperatures contribute to the problems associated with juicing, fogging and plate out of linear monoacid surfactants, and the present polyacid surfactants effectively resist such high levels of juicing, fogging and plate out.

The final composition may also contain ordinary additives, such as coloring agent, heat stabilizer, light stabilizer, molding aid, etc.

The compositions are useful for making automotive dash components such as dash boards, and thus are useful for automobiles having glass windshields and thermoplastic dash boards.

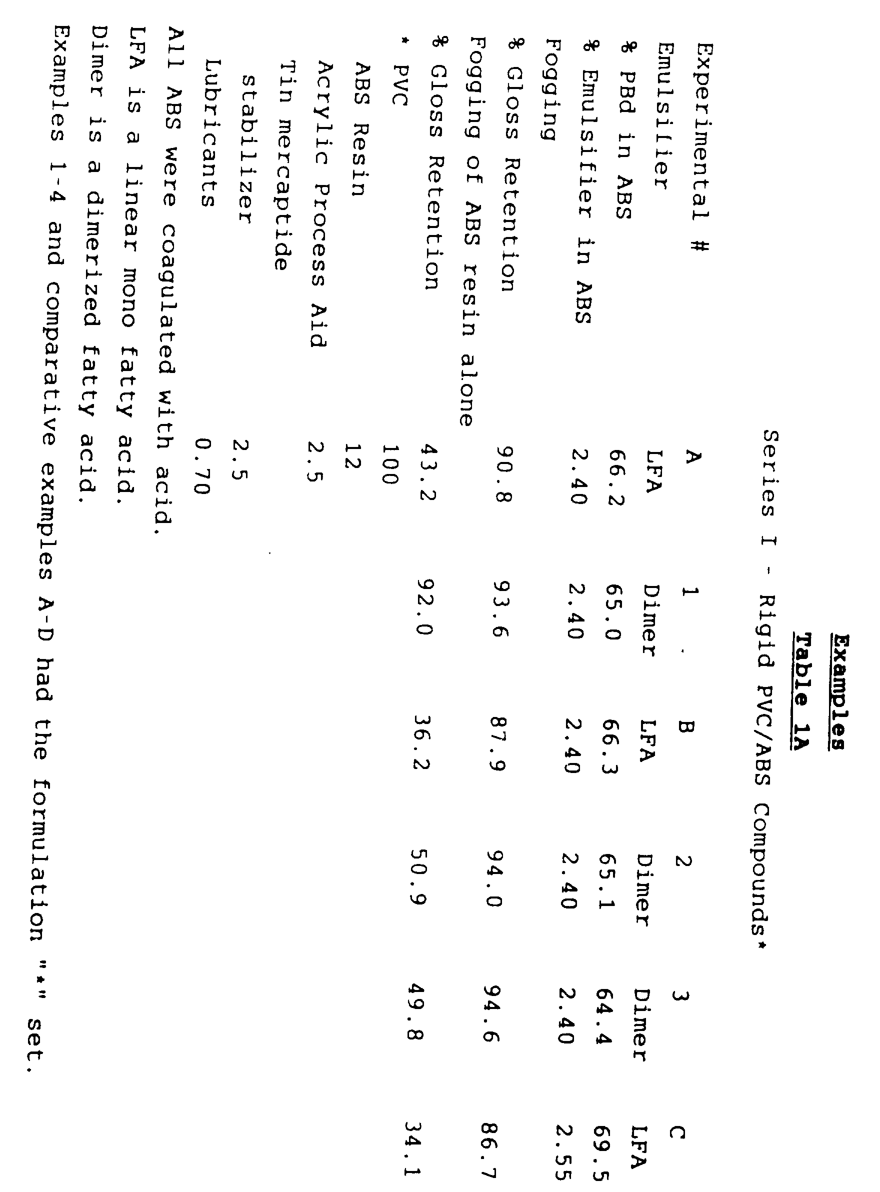

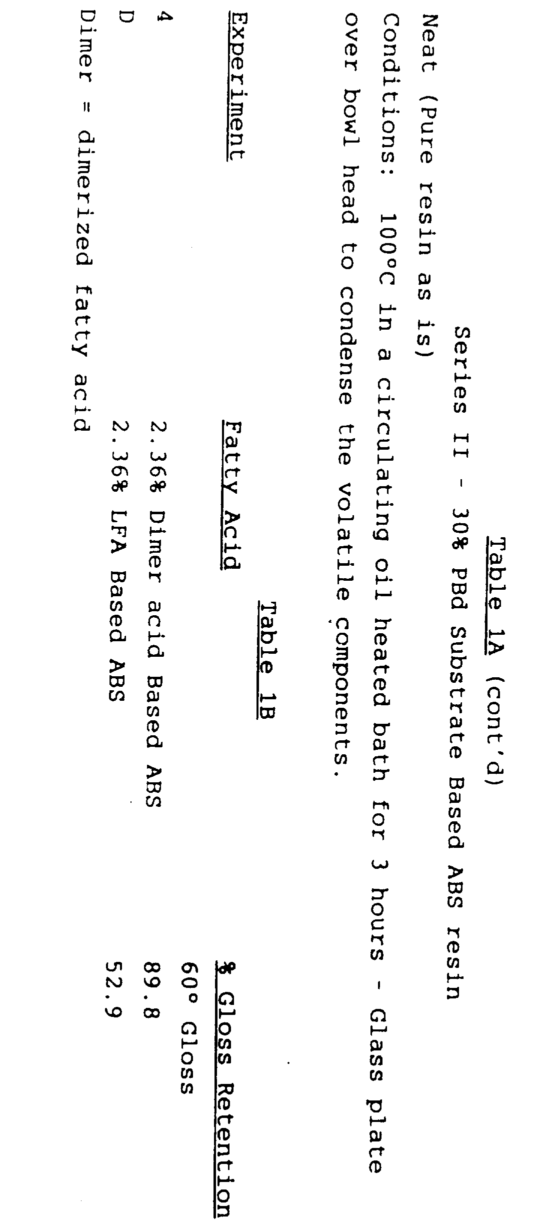

**Table II**

| | | | |
|---|---|---|---|
| Experiment # | 5 | E | |
| SAN resin | 0 | 0 | 0 to 75% |
| 2.36% Dimer acid based ABS** | 80 | | 0 to 100% |
| 2.36 LFA Based ABS** | | 80 | |
| Nitrile rubber | 20 | 20 | 0 to 50% |
| Monomeric or polymeric plasticizer | 0 | 0 | 0 to 60% |
| Fogging | | | |
| % Gloss Retention | 36 | 31 | |

| | | | |
|---|---|---|---|
| ** 30% PBd rubber based ABS resin (Rubber level in ABS can range from 10 to 85%.) | | | |

The chemical nature of the condensate was not analyzed to identify components.

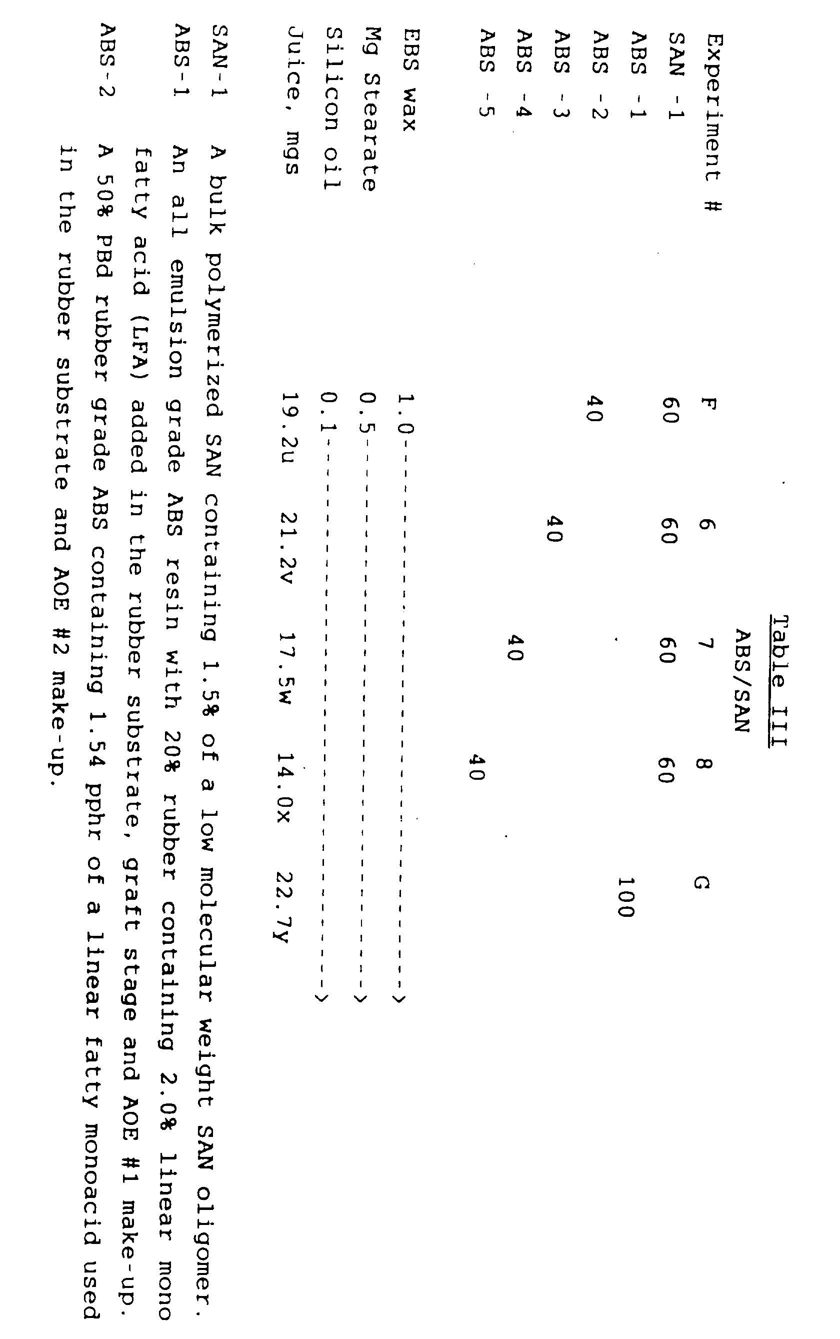

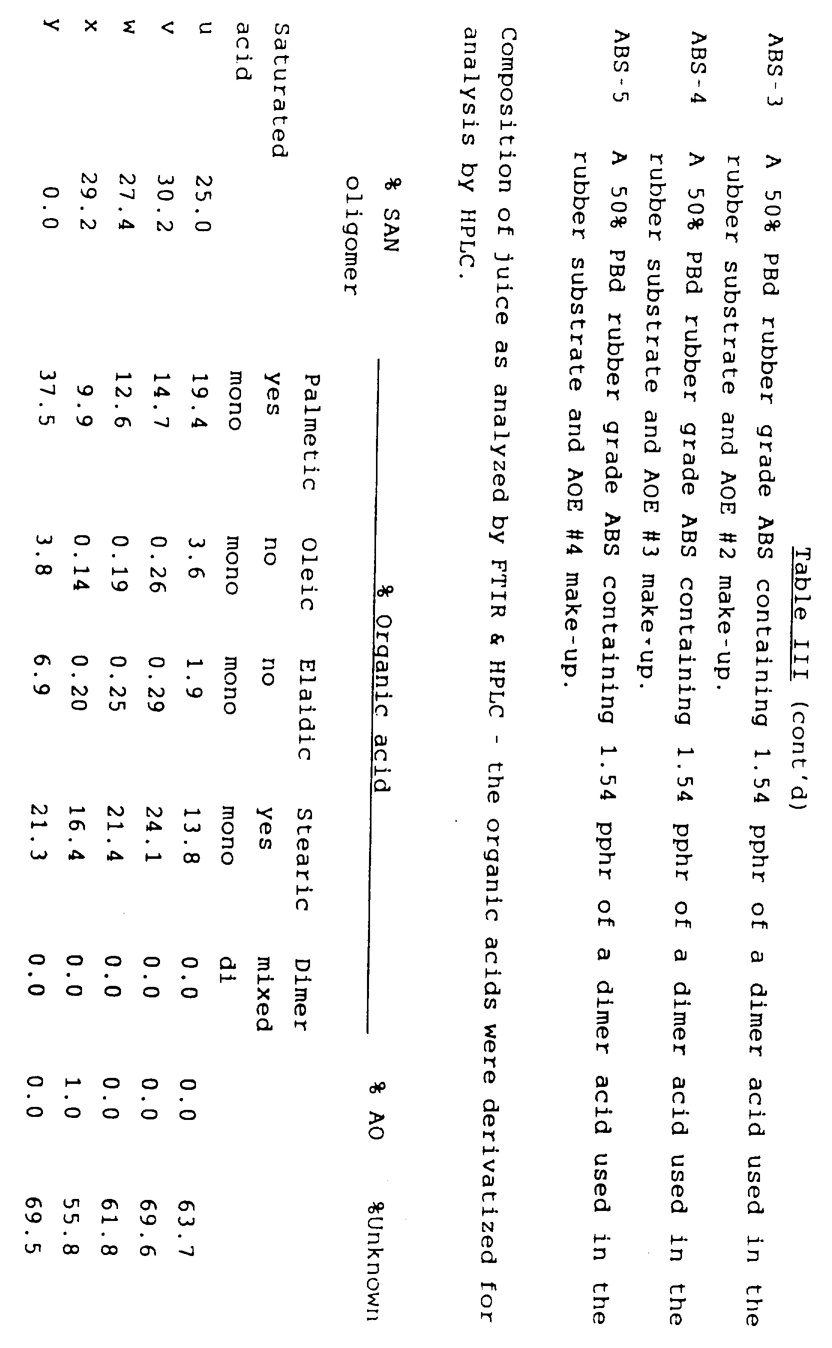

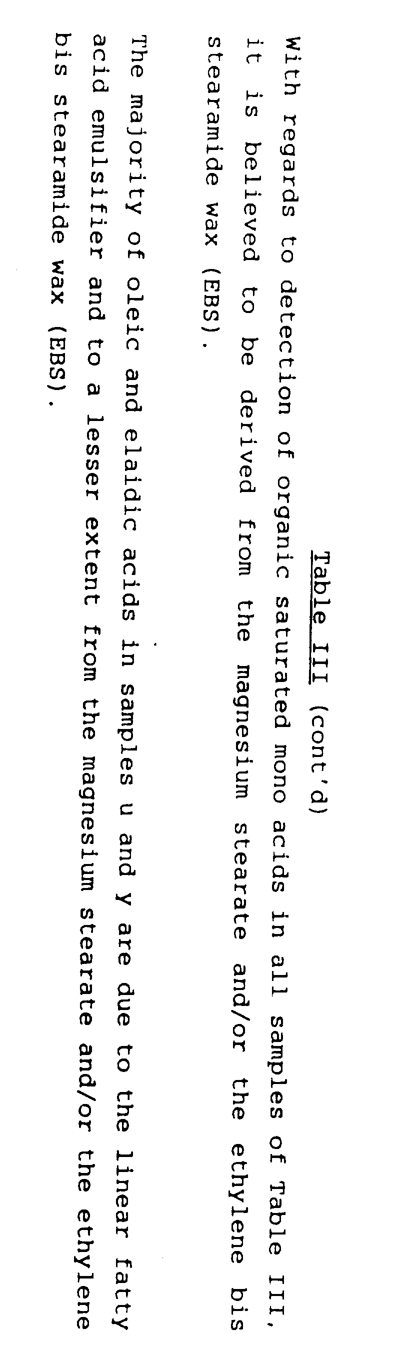

## Claims

1. A thermoplastic resin composition comprising :
(a) a vinyl chloride resin; and
(b) a graft copolymer containing a C₃₀-C₁₀₈ polyaci surfactant.

2. The composition of Claim 1 wherein said vinyl chloride resin is present at a level of from 20 to 95 percent by weight based on the total weight of the composition.

3. The composition of Claim 1 wherein said graft copolymer is present at a level of from 5 to 80 percent by weight based on the total weight of the composition.

4. The composition of any preceding claim wherein said polyacid is a cyclic dimer acid.

5. An article made from the composition of any preceding claim.

6. A low juicing impact modifier composition comprising :
(a) a rubber substrate with a Tg of less than 0°C present at a level of from 10 to 90 weight percent base on the total weight of the impact modifier composition;
(b) a superstrate grafted to said substrate, said superstrate with a glass transition temperature greater than 20°C being derived from a compound selected from th group consisting of vinyl aromatics, unsaturated nitriles, alkyl (alkyl) acrylates and mixtures thereof; and
(c) a polyacid selected from the group consisting of C₃₀ to C₁₀₈ polyacids.

7. The modifier composition of Claim 6 wherein said polyacid is present at a level from 0.25 to 5 percent by weight based on the total weight of the composition.

8. The modifier composition of Claim 6 or Claim 7 wherein said polyacid is selected from the group consisting of aliphatic or cyclic aromatic.

9. The composition of any one of Claims 6, 7 or 8 wherein said surfactant is present at a level of from 0.75 to 3.5 weight percent based on the total weight of the composition.

10. The composition of Claim 6 wherein said substrate is present at a level of between 50 and 85 weight percent based on the total weight of the composition.
